# EUROPEAN PATENT APPLICATION

(11) **EP 4 714 637 A1**
(43) Date of publication of application: **25.03.2026**
(21) Application number: 24383010.6
(22) Date of filing: 20.09.2024
(51) Int. Cl.: B29C 64/106, B29C 64/118, B29C 64/209, B29C 64/393, B33Y 10/00, B33Y 50/02

(54) **A METHOD FOR DETERMINING TRAJECTORIES FOR 3-D PRINTING TUBULAR STRUCTURES AND FOR TRANSFORMING THE TRAJECTORIES INTO INSTRUCTIONS**

(71) Applicant: Fundacion Centro de Tecnologias de Interaccion Visual y comunicaciones Vicomtech, 20009 San Sebastian (ES); Asociación Centro de Investigación Cooperativa en Biomateriales - CIC biomaGUNE, 20014 San Sebastián (ES)
(72) Inventor: CORTÉS ACOSTA, Camilo Andrés, 20009 San Sebastian (GIPUZKOA) (ES); JIMENEZ DE ABERASTURI, Dorleta, 20014 San Sebastián (ES); MEJÍA PARRA, Daniel, 20009 San Sebastian (Gipuzkoa) (ES); HENRIKSEN-LACEY, Malou, 20014 San Sebastián (ES); ZELAIA AMILIBIA, Maialen, 20009 San Sebastian (Gipuzkoa) (ES); GARCIA ASTRAIN, Clara, 20014 San Sebastián (ES); BERASATEGI OÑATIBIA, Garat, 20009 San Sebastian (Gipuzkoa) (ES); AIZARNA LOPETEGUI, Uxue, 20014 San Sebastián (ES)
(74) Representative: Balder IP Law, S.L.

(57) **Abstract**

A computer-implemented method for determining trajectories for 3-D printing, by extrusion, a 3-D model and for transforming the determined trajectories into instructions executable by a 3-D printer; the model comprises at least a stack of the inner rings and a stack of the outer rings; the determination of trajectories comprising determining for each successive set of layer(s): a printing trajectory of the inner ring(s) of the set and a printing trajectory of the outer ring(s) of the set; wherein in each subsequent set of layer(s) the trajectory of the outer ring(s) and the trajectory of the inner ring(s) are configured to be performed in a chronologic order opposite to the chronologic order of the performance in the previous set of layer(s).

The disclosure also relates to a computer program product, a data processing apparatus, a computer-readable medium and a 3-D printer for carrying out the method.

## Description

### TECHNICAL FIELD

The present invention is encompassed within the field of 3-D printing. In particular within the field of determination of trajectories for 3-D printing, for example, 3-D bioprinting.

### BACKGROUND

The state-of-the-art already comprises computer-implemented methods for determining trajectories for 3-D printing, by extrusion, a 3-D model and for transforming the determined trajectories into instructions executable by a 3-D printer.

Understanding the mechanisms that control real processes represents a significant challenge. For example, understanding the mechanisms that control biological processes in tissues represents a significant challenge in disease detection, control, and treatment. To address this challenge, considerable efforts have been directed towards in vitro reproduction of the physiological and pathological states found in native tissue microenvironments, with 3D bioprinting emerging as a highly promising tool for the creation of complex biological models that closely mimic the 3D structures and microenvironments of specific native tissues. Such models can be applied to a variety of health-associated challenges such as diseases modelling or drug design and screening in a high-throughput manner. As such, 3D bioprinting presents a valuable approach to diminishing our dependence on conventional animal testing as the primary method for investigating human pathophysiology's.

3D bioprinting involves the precise positioning of biological materials, materials that can act as extracellular matrixes and living cells with high reproducibility and speed in an automated manner. Various printhead technologies combined with an ever-growing library of biomaterials can be selected for model production. Additionally, a computer-generated model is required to design and control the layered deposition of materials optionally combined with diverse crosslinking technologies. An optimized combination of software (computer coding) and hardware (printheads, biomaterials) is required for the production of 3D models that are true to the initial design.

It is desirable to enhance, for example, the 3D printing of vessel-like structure, more in particular of a human artery model reproducing the three structural layers: the tunica adventitia, tunica media, and tunica intima. In addition to reproducing the macro-structure and mechanical properties of the biomaterials found in each layer, the model may aim to truthfully replicate the distinct cells and the materials properties found in each layer and their microenvironment. Successful printing of cylindrical models (e.g., multi-material models) that precisely mimic the micro- and macro-organization of vessel-like structures poses a significant hurdle in the field of bioprinting and 3D in vitro modeling. More in general, it is desirable to enhance the 3D printing of structures.

### SUMMARY

A first aspect of the disclosure relates to a computer-implemented method for determining trajectories for 3-D printing (e.g., bioprinting), by extrusion, a 3-D model and for transforming the determined trajectories into instructions; the instructions being executable by a 3-D printer; the model comprising a stack of layers, each layer comprising at least an inner ring and an outer ring, the inner ring being within the outer ring, so that the model comprises at least a stack of the inner rings and a stack of the outer rings; the determination of trajectories comprising determining for each successive set of layer(s) of the stack of layers: a printing trajectory of the inner ring(s) of the set and a printing trajectory of the outer ring(s) of the set; wherein in a set of layer(s) of the stack the trajectory of the outer ring(s) is configured to be performed after the trajectory of the inner ring(s), and in each subsequent set of layer(s) of the stack the trajectory of the outer ring(s) and the trajectory of the inner ring(s) are configured to be performed in a chronologic order opposite to the chronologic order of the performance in the previous set of layer(s) of the stack.

3-D printing (i.e., three-dimensional printing) refers to making a 3-D physical object by depositing material following an order of deposition. The object is made portion-by-portion by depositing material which bonds to previously deposited material.

Usually, prior to performing the 3-D printing, a computer-readable model of the object to be printed is processed to generate instructions readable by a 3-D printer (more specifically, instructions to be executed by processing means of a 3-D printer), the instructions being for 3-D printing the object. The model is, for example, a Computer-Aided-Design (i.e., CAD) file. The instructions are in a format, for example, G-code.

The instructions are for printing the object layer-by-layer. To do so, a software commonly known as slicer is used to segment the model (i.e., to virtually slice the object) as a stack of the layers to be printed; the layers being, in general, parallel to each other. The layers are, in general, horizontal.

In the present disclosure, the term "layer" has the meaning and scope which normally has in the field of 3-D printing by extrusion. In other words, the term "layer", unless otherwise stated, refers to each slice of the horizontal slices into which the model is sliced for being printed. Each slice is horizontal in the sense that all portions of the slice are to be deposited at a same height and have a same thickness.

In the context of the present disclosure, the term "ring" does not necessarily refer to a body having a circular shape although in some embodiments the term "ring" refers to a body having a circular shape. In particular, the term "ring" refers to a closed line, for example, to closed curves or to polygons, for example, to polygons which facilitate the implementation of printing of closed curves. For example, the term "ring" refers to a body having substantially circular shape, e.g., a circular, elliptical or oval shape.

A material deposited by the 3-D printing is, for example, a hydrogel, for example, at least one of: agarose, alginate, chitosan, collagen, fibrin, gelatin, hyaluronic acid, N-Isopropylacrylamide (NIPAM) and their methacrylated derivatives, polyethylene glycol and polyethylene glycol diacrylate. The material may be a bio-ink, i.e., an ink comprising cells. The skilled person understands that the material may be other type of material which has properties appropriate for being extruded and for keeping its shape after being deposited in the 3-D printing.

In the present disclosure, the term "bioprinting" refers to that the material to be deposited in the printing is compatible with living cells to be deposited after the material has been deposited by the printing and/or to a material to be printed which includes living cells during the printing.

The trajectories are for being performed by at least one printhead of a 3-D printer.

Reversing, in each set of layer(s), the order of performance of the trajectories of the outer ring(s) and of the inner ring(s) allows minimizing a printing time of the model because if the ring printed the latest in the previous set of layer(s) is an inner ring, the ring to be printed first in the subsequent set of layer(s) is also an inner ring, and if the ring printed the latest in the previous set of layer(s) is an outer ring, the ring to be printed first in the subsequent set of layer(s) is also an outer ring. Therefore, movement of at least one printhead between two consecutive sets of layer(s) can be minimized. Decreasing printing time is advantageous for enhancing health of cells forming part of the model and for keeping native characteristics and functionality of cells of the model because relatively long printing times can introduce alterations in cell behavior, introduce stress and increase contamination.

In some embodiments, at least one of the rings of a layer comprises just one filament. Therefore, the width of the at least one ring is the width of just one filament.

In some embodiments, at least one of the rings of a layer comprises more than one filament. Therefore, the at least one ring comprises filaments in contact with each other and the width of the at least one ring is the sum of the widths of the filaments of the ring.

In some embodiments, at least one of the stacks of cylinders has a varying thickness.

The inner rings constitute the stack of inner rings, and the outer rings constitute the stack of outer rings.

The stack of inner rings and/or the stack of outer rings may have a variable width or a constant width. For example, rings of different layers of the stack may comprise a different number of filaments.

In some embodiments the rings of a same layer are separated by a gap (i.e., the rings are not in contact).

In some embodiments, each layer of the stack of layers fulfills that the rings of a same layer are sufficiently close to each other to be crosslinked together.

In some embodiments, there is not any gap between at least two rings of a same layer. For example, each layer of the stack of layers fulfills that there is not any gap between the rings of a same layer.

Each set of layer(s) comprises just one layer or several successive layers of the model.

The method allows adjusting the number of layers of each set of layer(s), thus allowing adjusting a maximum height difference between the stack of inner rings and the stack of outer rings during their printing. If the outer rings are very close to the inner rings, there is too much difference in height between the stacks of rings in progress, and the printing nozzle is too big, then the nozzle may undesirable collide with one of the rings of the higher stack while printing a ring of the lower stack. The risk of collision may be minimized by decreasing the difference of numbers of layers between the stacks of rings.

In some embodiments, the method comprises adjusting a number of layers of each set of layer(s) of the stack to prevent a collision of a nozzle while printing a ring with an already printed ring, the already printed ring being at a greater height than the ring that is being printed; the adjustment being based on a size of a printing nozzle, a thickness of the layer(s) of the set and a minimum distance, for all the layers of the set, between an outer ring and an inner ring of a same layer of the set.

In some embodiments, each set of layer(s) has just one layer.

Completely printing the at least two rings of each layer of the model prior to printing a subsequent layer allows minimizing impacts between printhead(s) of the 3-D printer and layers already printed without having to perform computations for adjusting the number of layers to minimize the risk of impact or to prevent such impacts. This happens because a risk that the printhead touches a ring while printing another ring of the same layer is decreased because the maximum difference of height between the stacks of rings is just one layer.

In some embodiments, an initial printing point of the printing trajectory of each ring is at coordinates in the direction(s) of X and/or Y different than coordinates in the direction(s) of X and/or Y of the initial printing point of the printing trajectory of the previous ring of the same stack of rings; wherein X and Y are radial directions of the rings, the X direction being perpendicular to the Y direction, and the Z direction being perpendicular to the X and Y directions.

The initial printing point is the point in which the printing of the respective ring begins. By changing the position of the initial printing point (e.g., rotating the initial printing point with respect to the center of the ring), errors that regularly occur when closing (i.e., ending) a printing trajectory of a ring (e.g., incomplete closing of the ring) are not in contact with each other because the points in which these errors occur are not in a same straight line. Thereby, each two rings in contact in a same stack of rings have an initial printing point at different coordinate(s) X and/or Y in addition to being at a different Z coordinate.

In some embodiments, the initial printing points of rings of a same stack of rings are uniformly spaced forming an helix. Thereby, the initial printing points of the stack of rings are regularly distributed along the stack of rings. Distributing the initial printing points in a regular manner allows simplifying a printing logic (and hence computation of trajectories) and enhancing uniformity of the model compared to altering the distribution. For example, the stack of rings may comprise initial printing points having at least three different pairs of X, Y coordinates, for example, at least six different pairs of X, Y coordinates, for example, at least twelve different pairs of X, Y coordinates. A greater number of different X, Y coordinates allows achieving a higher degree of uniformity of the model.

In some embodiments, each layer of the stack of layers comprises an intermediate ring, the intermediate ring being between the outer ring and the inner ring of the same layer, the model comprising a stack of intermediate rings; the determination of trajectories comprising determining for each successive set of layer(s) of the stack: a printing trajectory of the intermediate ring(s) of the set; wherein the printing trajectory of the intermediate ring(s) of the set is configured to be performed between the performance time of the printing trajectory of the inner ring(s) and the performance time of the printing trajectory of the outer ring(s) of the set.

Printing the intermediate ring(s) of the set between the printing of the inner ring(s) and the outer ring(s) (i.e., after printing the inner ring(s) and before printing the outer ring(s), or before printing the inner ring(s) and after printing the outer ring(s)) of the set allows minimizing a risk that the printhead collides with an already printed ring of the same set or undesirably deposits material on the already printed ring because the printhead moves away from the already printed ring(s) of the same set, so that it is not required that the printhead goes over the printed ring(s) to print the intermediate ring(s) of the same set.

In some embodiments, each layer of the stack of layers comprises a plurality of intermediate rings, the model comprising a plurality of stacks of intermediate rings; the trajectories of the intermediate ring(s) being configured to be performed between the performance time of the inner ring(s) and the performance time of the outer ring(s) of the same set and in a chronologic order of increasing distance from the inner ring(s) or outer ring(s) printed first in the same set.

Printing the intermediate ring(s) of a set in the chronologic order of increasing distance (i.e., printing the intermediate ring(s) at a smaller distance before printing the intermediate ring(s) at a greater distance) from the ring(s) printed first also allows minimizing a risk that the printhead collides with an already printed ring of the same set or undesirably deposits material on the already printed ring because the at least one printhead gradually moves further away from the already printed ring(s) of the same set, so that it is not required that the printhead goes over the already printed intermediate ring(s) to print the rest of intermediate ring(s) of the same set of layer(s).

In some embodiments, the determination of the trajectories further comprises determining non-printing trajectories for moving a printhead towards an inner ring and non-printing trajectories for moving the printhead towards an outer ring; wherein the non-printing trajectories are configured to connect an end of a printing trajectory of the ring(s) of a same set and of a same stack of rings to an initial printing point of a printing trajectory of the ring(s) of the same set and of another stack of rings; the non-printing trajectory comprises a portion extending away from the end of the printing trajectory in the Z direction followed by a portion approaching the initial printing point in the X and/or Y directions followed by a portion approaching the initial printing point in the Z direction; wherein X and Y are radial directions of the rings, the X direction being perpendicular to the Y direction, and the Z direction being perpendicular to the X and Y directions.

Thereby, upon executing the instructions, the printhead approaches, in the X and/or Y directions, the subsequent printing trajectory after moving the printhead away in the Z direction from the already printed rings. By moving away in the Z direction prior to approaching the subsequent trajectory in the X and/or Y directions, a risk that the printhead impacts on the already printed rings is minimized.

In some embodiments, the rings of different stacks of rings are made of the same material.

In some embodiments, the rings of one of the stacks of rings are made of a material different than the rings of another stack of rings.

Therefore, the method allows printing stacks of rings of different materials. In these embodiments, it may be particularly advantageous that each set of layer(s) comprises more than one layer, so that several layers of a same material are printed prior to printing layers of a different material. Printing several layers of a same material in a row allows minimizing a risk that the printing nozzle clogs between said layers because an idle time of the nozzle between printing said layers is minimized.

Using different materials for different stacks of rings allows enhancing similarity of properties of the model with properties of a real object to be modelled (e.g., a blood vessel) because each part of the object may be better modelled with a different material.

In some embodiments, the method comprises associating a first material with the printing trajectories of rings of a first stack of rings, and associating a second material with the printing trajectories of rings of a second stack of rings. These associations may be performed by associating a first extruder and/or nozzle (e.g., a first printhead) with the printing trajectories of rings of the first stack of rings, and associating a second extruder and/or nozzle (e.g., a second printhead) with the printing trajectories of rings of the second stack of rings, the first extruder and/or nozzle being configured to print the first material, and the second extruder and/or nozzle being configured to print the second material. Therefore, the instructions executable by the 3-D printer include instructions about which extruder and/or nozzle performs each printing trajectory.

In some embodiments, the determination of the trajectories comprises not determining any printing trajectory to be performed between the printing trajectory of a ring to be printed last in a set of layer(s) and the ring to be printed first in the successive set of layer(s).

Said lack of printing allows minimizing the time required to print the model because not any other printing is performed between the printing of trajectories of rings of a same stack of rings in two successive sets of layers. In addition, said lack of printing allows further minimizing the time required for printing because both rings to be printed are in a same stack of layers and there is not any printing between the printing of both rings, so that movement of the printhead between both rings is relatively small.

In some embodiments, the determination of the trajectories comprises not determining any printing trajectory to be performed between the printing trajectories of the rings of the stack of layers of the model. This feature allows further minimizing the time required to print the model because not any other printing is performed between the printing of trajectories of the rings of the model.

In addition, when the ring to be printed first in the successive set of layer(s) is made of a same material as the ring to be printed last in the previous set of layer(s) and different stacks of rings are made of different materials, said lack of printing allows preventing a change of material to be printed between consecutive layers, thus allowing minimizing the time required to print the model and minimizing hardware changes required to print a different material (e.g., change of extruder and/or nozzle).

In some embodiments, the determination of the trajectories comprises determining a non-printing trajectory between an end of a printing trajectory of the ring to be printed last in a set of layer(s) and an initial printing point of a printing trajectory of the ring to be printed first in the successive set of layer(s); the non-printing trajectory being configured to move the printhead in the X and/or Y direction immediately after moving away, in the Z direction, from the ring to be printed last, wherein the moving away in the Z direction is performed immediately after completing the trajectory of the ring to be printed last. Thereby allowing minimizing distance of printhead movement between the printing of consecutive rings of a same stack of rings and two successive sets of layers, thus allowing further decrease of printing time.

In some embodiments, the method comprises determining trajectories of a curing device for illuminating, with the curing device, rings configured to be printed before the curing device performs the trajectories.

By adjusting the trajectories of the curing device, different portions of already printed rings can be illuminated (e.g., with ultraviolet light and/or visible light), so that the material of said portions is cured (i.e., crosslinked). For example, the material of each one of the stacks of rings of the model may be a hydrogel containing cells, wherein the hydrogel can be crosslinked.

Crosslinking allows using printing materials having low viscosity while allowing enough printing accuracy and material strength. Materials having low viscosity are usually required to be able to print the cells together with the structural material of the model.

In some embodiments, the trajectories of the curing device are concentric with rings printed before the performance of the curing of said rings. Concentric trajectories of the curing device allow maximizing a portion of the rings which is properly cured because allows moving the curing device along the whole length of the ring.

In some embodiments, at least some of the trajectories of the curing device are configured to be performed after every N layers of the model, wherein N is a natural number greater than one. Moving the curing device allows adjusting the position of the curing device to achieve the curing of several layers simultaneously (i.e., allowing dispensing with the need to cure every layer right after printing the layer).

In some embodiments, the number N changes during the printing of the model. For, example, the number N may be lower for the initial layers of the model and greater for subsequent layers of the model. For example, N may be one for ten initial layers and five for the next ten layers (e.g., for the rest of the layers of the model).

In some embodiments, the trajectories of the curing device are parallel to or the same as the printing trajectories of the rings. For example, the trajectories of the curing device may be the same as printing trajectories of the rings but at a different height in the Z direction. A curing device that follows the same trajectories as or parallel trajectories to the printing trajectories of the rings allows ensuring that the whole length of the ring is cured without having to perform several passes of the curing device, since it allows that the light of the curing device reaches every position in which the printhead has deposited material by performing a trajectory similar to the one of the printhead.

In some embodiments, the curing device is configured to be immobile (i.e., there are no trajectories of the curing device) during the whole printing of the model and in a position for illuminating 360° of each stack of rings. Leaving the curing device at a constant position facilitates computing of trajectories, since it is not required to determine trajectories of the curing device which must be suitable for curing the rings and which do not collide with the printed layers nor with the printhead.

In some embodiments, the trajectories of the curing device are collinear with the centers of the rings. Displacing a curing device following the centers of the rings (e.g., merely in the Z direction) allows reaching a compromise between not moving the curing device and moving the curing device along trajectories parallel to the printing trajectories of the rings.

In some embodiments, the method further comprises printing the model by executing, by a 3-D printer, the instructions.

In some embodiments, the material extruded in the 3-D printing is extruded into a support bath.

In some embodiments, the material extruded in the 3-D printing is not extruded in a support bath.

In some embodiments, the rings of all layers of the stack of layers are concentric.

In some embodiments, the stacks of rings are cylinders, preferably the model comprises at least three stacks of rings (i.e., at least three cylinders).

Each cylinder has a cross-section being substantially ring-shaped. The fact that the cross-section is substantially ring-shaped does not rule out, for example, certain (e.g., polygonal) shapes, which may be sometimes preferred to facilitate the practical implementation of the method. Each cylinder may have a varying thickness.

In some embodiments, the model is a model of a blood vessel.

A blood vessel comprises three parts: tunica adventitia, tunica media and tunica intima. Each of these parts is represented in the model with a stack of rings (e.g., a cylinder). In particular, the stack of inner rings (e.g., inner cylinder) represents the tunica intima, the stack of intermediate rings (e.g., intermediate cylinder) represents the tunica media, and the stack of outer rings (e.g., outer cylinder) represents the tunica adventitia. In general, blood vessels are better modelled with concentric cylinders.

A second aspect of the disclosure relates to a computer program product comprising instructions which, when the program is executed by a computer, cause the computer to carry out a method according to the first aspect of the disclosure.

A third aspect of the disclosure relates to a data processing apparatus comprising means for carrying out a method according to the first aspect of the disclosure.

A fourth aspect of the disclosure relates to a computer-readable medium comprising instructions which, when executed by a computer, cause the computer to carry out a method according to the first aspect of the disclosure.

A fifth aspect of the disclosure relates to a 3-D printer configured to execute the instructions obtained in the first aspect of the disclosure.

Similar advantages as those described with respect to the first aspect of the disclosure are also applicable to the second, third, fourth and fifth aspects of the disclosure.

### BRIEF DESCRIPTION OF THE DRAWINGS

To complete the description and to provide for a better understanding of the disclosure, a set of drawings is provided. Said drawings form an integral part of the description and illustrate embodiments of the disclosure, which should not be interpreted as restricting the scope of the disclosure, but just as examples of how the disclosure can be carried out. The drawings comprise the following figures:
Figure 1 shows a diagram of a method according to some embodiments of the disclosure.
Figure 2 diagrammatically shows a portion of a model 3-D printed in accordance with embodiments.
Figure 3 shows a schematic representation of successive sets of layers in accordance with embodiments.
Figures 4A and 4B show examples of order of printing of rings in accordance with embodiments.
Figure 5 shows examples of initial printing points in accordance with embodiments.
Figure 6 shows examples of trajectories in accordance with embodiments.

### DETAILED DESCRIPTION

The following description is not to be taken in a limiting sense but is given solely for the purpose of describing the broad principles of the invention. Embodiments of the invention will be described by way of example, with reference to the above-mentioned drawings.

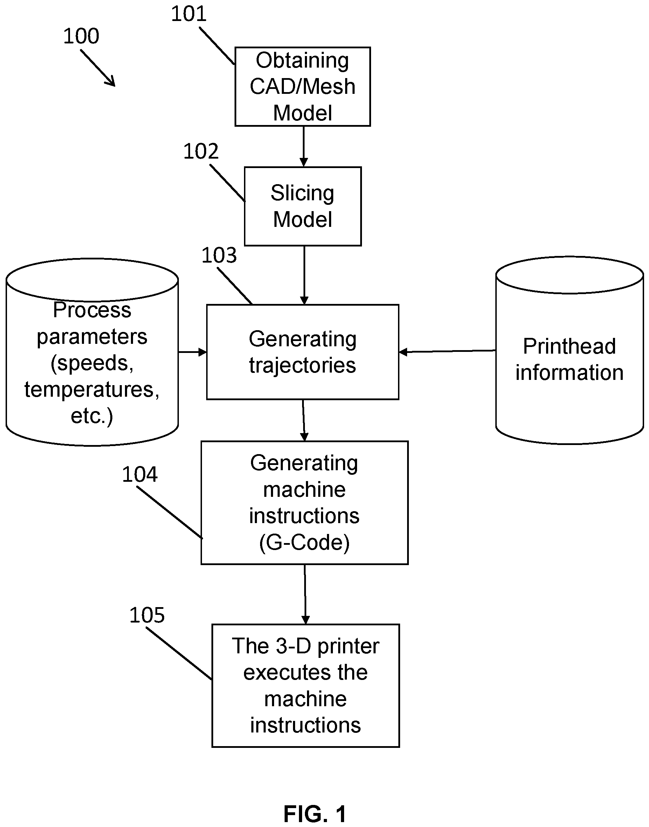

Figure 1 shows a diagram of an example of a method 100 in which the determined trajectories and the transformation of the trajectories into instructions are performed according to the present disclosure.

In step 101 of the method 100 a CAD or mesh model of an object that is to be 3-D printed is obtained (e.g., imported). In step 102, the model is sliced thereby obtaining slices of the model. In step 103 it is performed the determination of the trajectories that a printhead is to follow to print the object. The generation of the trajectories may be based on process parameters, for example, speeds and temperatures of the printing and information about the printhead (e.g., a size of the printhead). In step 104, the trajectories are transformed into machine instructions (e.g., G-code). In step 105, the 3-D printer executes the machine instructions.

Steps 101, 102, 103 and 104 are performed by processing means (e.g., least one CPU, at least one GPU, at least one FPGA, at least one ASIC, at least one personal computer or at least one laptop)

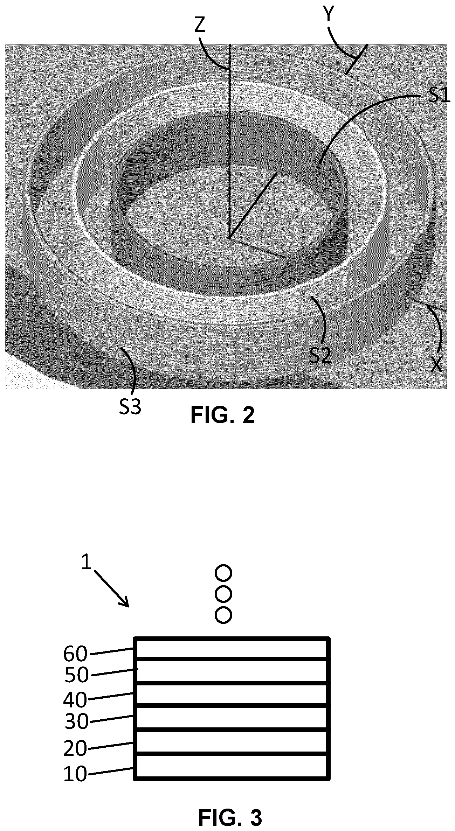

Figure 2 shows a portion of a model which can be printed in accordance with the present disclosure. The model comprises a stack of layers 1 schematically depicted in figure 3. Each layer of the stack of layers comprises an inner ring, an intermediate ring and an outer ring, so that the model comprises a stack S1 of inner rings, a stack S2 of intermediate rings and a stack S3 of outer rings. The model is a model of a blood vessel. The skilled in the art understands that a model of an object different than a blood vessel may be printed using the method of the present disclosure. To better represent the model of a blood vessel, each one of the three stacks of rings is made of a different material which better represents the properties at each depth of a blood vessel.

Figure 2 also shows examples of an X direction, a Y direction, and a Z direction. The Y direction is a radial direction perpendicular to the X direction, which is also a radial direction. The Z direction is perpendicular to the X direction and to the Y direction. The Z direction is, in particular, a direction of height of the model.

The lateral view of stack of layers 1 of the model is schematically represented in figure 3, where it can be seen that the stack of layers 1 is formed by successive sets of layer(s) wherein each subsequent set of layer(s) is deposited on a previous set of layer(s) (e.g., the set of layer(s) 20 is deposited on the previous set of layer(s) 10). The stack of layers 1 may comprise more than six layers, and this has been represented with three suspension points above the drawn layers.

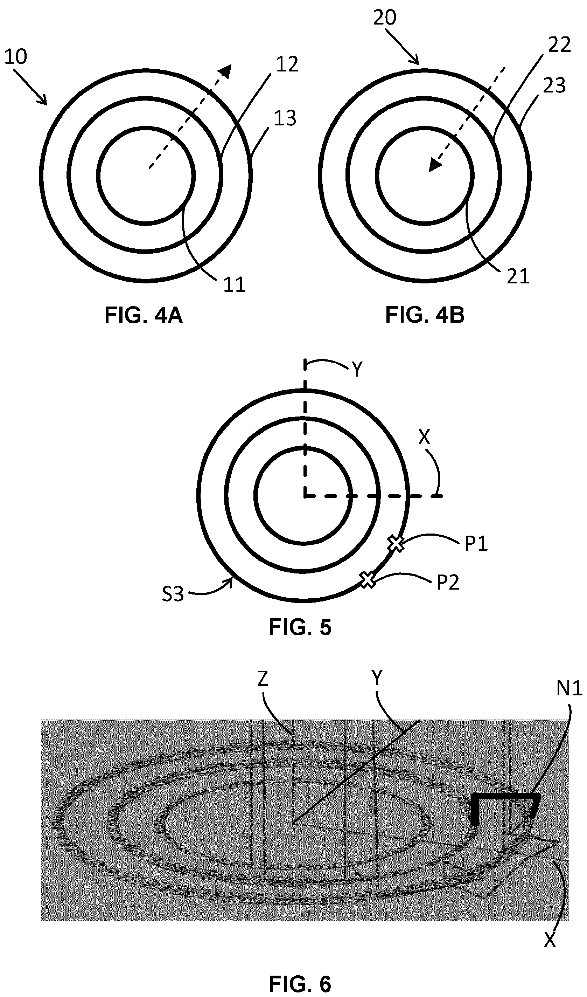

Figure 4A shows an order of printing of rings of the set of layer(s) 10. In particular, figure 4A shows that the order of performance of printing trajectories of rings of the set of layer(s) 10 is from the innermost ring(s) 11 to the outermost ring(s) 13, in particular, the inner ring(s) 11 of the set of layer(s) 10 is/are configured to be printed initially, the intermediate ring(s) 12 of the set of layer(s) 10 is/are configured to be printed subsequently to the printing of the inner ring(s) 11, and the outer ring(s) 13 is/are configured to be printed subsequently to the printing of the intermediate ring(s) 12.

Figure 4B shows the printing order of rings of the set of layer(s) 20, which is the set of layer(s) subsequent to the set of layer(s) 10. Figure 4B shows that the order of performance of the printing trajectories of rings of the set of layer(s) 20 is the opposite of the order of performance of the printing trajectories of the rings of the set of layer(s) 10 (i.e., from the outermost ring(s) 23 to the innermost ring(s) 21). In particular, the outer ring(s) 23 of the set of layer(s) 20 is/are configured to be printed after the printing of the outer ring(s) 13 of the set of layer(s) 10; the intermediate ring(s) 22 is/are configured to be printed after the printing of the outer ring(s) 23; and the inner ring(s) 21 is/are configured to be printed after the printing of the intermediate ring(s).

In each subsequent set of layer(s) (30, 40, 50, 60, ...) of the stack of layer(s) 1, the order of performance of the printing of rings of the set of layer(s) is the opposite with respect to the order of performance of the printing of rings of the previous set of layer(s), i.e.,:
- in the set of layer(s) 30 the order of performance of the printing of the rings is from the innermost ring(s) to the outermost ring(s),
- in the set of layer(s) 40 the order of performance of the printing of the rings is from the outermost ring(s) to the innermost ring(s),
- in the set of layer(s) 50 the order of performance of the printing of the rings is from the innermost ring(s) to the outermost ring(s),

- in the set of layer(s) 60 the order of performance of the printing of the rings is from the outermost ring(s) to the innermost ring(s),
- and so on.

At least one layer of the set of layer(s) could be formed by just one layer, so that the printing order of the rings of said layer is the opposite of the printing order of the rings of the previous a layer of the stack of layers, and, if said layer is not the last layer of the stack of layers, the opposite of the printing order of the rings of the subsequent layer of the stack of layers.

Figure 5 shows the initial printing points P1, P2 of two successive rings of a same stack S3 of rings. In particular, P2 is the initial printing point of a ring subsequent to the ring having P1 as the initial printing point. As shown in figure 5, the initial printing point P2 has different X, Y coordinates than the X, Y coordinates of the initial printing point P1.

Figure 6 shows the same X, Y, Z directions as figure 2. Figure 6 shows trajectories to be followed by a printhead of a 3-D printer. In particular, figure 6 shows a non-printing trajectory N1 for moving the printhead from an end of a printing trajectory of an outer ring to an initial printing point of a printing trajectory of an intermediate ring configured to be printed subsequently to the printing of the outer ring. The non-printing trajectory (which in this case is substantially U-shaped) has been marked with a thick black line to make it distinguishable from the rest of the trajectories. As can be seen in figure 6, the non-printing trajectory comprises an initial portion to move the printhead away, in the Z direction, from the end of the printing trajectory of the outer ring. The initial portion of the non-printing trajectory is followed by a portion to move the printhead closer, in the X and/or Y direction(s), to the initial printing point of the intermediate ring, and the non-printing trajectory comprises a subsequent portion which approaches the initial printing point of the intermediate ring in the Z direction.

In this text, the term "comprises" and its derivations (such as "comprising", etc.) should not be understood in an excluding sense, that is, these terms should not be interpreted as excluding the possibility that what is described and defined may include further elements, steps, etc.

On the other hand, the disclosure is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A computer-implemented method for determining trajectories for 3-D printing, by extrusion, a 3-D model and for transforming the determined trajectories into instructions; the instructions being executable by a 3-D printer; the model comprising a stack of layers (1), each layer comprising at least an inner ring and an outer ring, the inner ring being within the outer ring, so that the model comprises at least a stack (S1) of the inner rings and a stack (S3) of the outer rings; the determination of trajectories comprising determining for each successive set of layer(s) (10, 20, 30, 40, 50, 60) of the stack of layers (1): a printing trajectory of the inner ring(s) (11) of the set and a printing trajectory of the outer ring(s) (13) of the set; wherein in a set of layer(s) of the stack the trajectory of the outer ring(s) (13) is configured to be performed after the trajectory of the inner ring(s) (11), and in each subsequent set of layer(s) of the stack the trajectory of the outer ring(s) (23) and the trajectory of the inner ring(s) (21) are configured to be performed in a chronologic order opposite to the chronologic order of the performance in the previous set of layer(s) of the stack.

2. The method of claim 1, wherein each set of layer(s) has just one layer.

3. The method of any one of the previous claims, wherein an initial printing point (P1, P2) of the printing trajectory of each ring is at coordinates in the direction(s) of X and/or Y different than coordinates in the direction(s) of X and/or Y of the initial printing point of the printing trajectory of the previous ring of the same stack of rings; wherein X and Y are radial directions of the rings, the X direction being perpendicular to the Y direction, and the Z direction being perpendicular to the X and Y directions.

4. The method of any one of the previous claims, wherein each layer of the stack of layers comprises an intermediate ring, the intermediate ring being between the outer ring and the inner ring of the same layer, the model comprising a stack of intermediate rings (S2); the determination of trajectories comprising determining for each successive set of layer(s) (10, 20, 30, 40, 50, 60) of the stack of layers (1): a printing trajectory of the intermediate ring(s) (12) of the set; wherein the printing trajectory of the intermediate ring(s) of the set is configured to be performed between the performance time of the printing trajectory of the inner ring(s) (11) and the performance time of the printing trajectory of the outer ring(s) (13) of the set.

5. The method of any one of the previous claims, wherein the determination of the trajectories further comprises determining non-printing trajectories (N1) for moving a printhead towards an inner ring and non-printing trajectories for moving the printhead towards an outer ring; wherein the non-printing trajectories are configured to connect an end of a printing trajectory of the ring(s) of a same set and of a same stack of rings to an initial printing point of a printing trajectory of the ring(s) of the same set and of another stack of rings; the non-printing trajectory comprises a portion extending away from the end of the printing trajectory in the Z direction followed by a portion approaching the initial printing point in the X and/or Y directions followed by a portion approaching the initial printing point in the Z direction; wherein X and Y are radial directions of the rings, the X direction being perpendicular to the Y direction, and the Z direction being perpendicular to the X and Y directions.

6. The method of any one of the previous claims, wherein the rings of one of the stacks of rings are made of a material different than the rings of another stack of rings.

7. The method of any one of the previous claims, wherein the determination of the trajectories comprises not determining any printing trajectory between the printing trajectory of a ring to be printed last in a set of layer(s) and the ring to be printed first in the successive set of layer(s).

8. The method of any one of the previous claims, the method comprising determining trajectories of a curing device for illuminating, with the curing device, rings configured to be printed before the curing device performs the trajectories.

9. The method of any one of the previous claims, the method further comprising printing the model by executing, by a 3-D printer, the instructions.

10. The method of any one of the previous claims, wherein the rings of all layers of the stack of layers are concentric.

11. The method of any one of the previous claims, wherein the stacks of rings are cylinders, preferably wherein the model comprises at least three stacks of rings.

12. The method of any one of the previous claims, wherein the model is a model of a blood vessel.

13. A computer program product comprising instructions which, when the program is executed by a computer, cause the computer to carry out the method of any one of claims 1 to 12.

14. A data processing apparatus comprising means for carrying out the method of any one of claims 1 to 12.

15. A computer-readable medium comprising instructions which, when executed by a computer, cause the computer to carry out the method of any one of claims 1 to 12.
